# EUROPEAN PATENT SPECIFICATION

(11) **EP 1 582 416 B1**
(45) Date of publication and mention of the grant of the patent: **17.10.2007**
(21) Application number: 05007119.0
(22) Date of filing: 31.03.2005
(51) Int. Cl.: B60R 19/18, B60R 19/26

(54) **Force and deceleration delimiting devices and methods for operating the same**
Vorrichtungen zur begrenzung von Kraft und Beschleunigung sowie entsprechendes Verfahren
Dispositifs pour délimiter force ou décélération et procédé de fonctionnement

(30) Priority: 02.04.2004 US 559115 P; 29.03.2005 US 93271
(43) Date of publication of application: 05.10.2005
(73) Proprietor: GM Global Technology Operations, Inc., Detroit, MI 48265-3000 (US)
(72) Inventor: Aase, Jan H., Oakland Township Michigan 48306-1680 (US); Browne, Alan L., Grosse Pointe Michigan 48230 (US); Johnson, Nancy L., Northville Michigan 48167 (US)
(74) Representative: Manitz, Finsterwald & Partner GbR

(56) References cited:
- EP-A- 0 978 442
- EP-A- 1 396 391
- DE-A1- 4 425 830
- DE-A1- 10 014 888
- US-A- 5 454 589

## Description

### BACKGROUND

The present disclosure generally relates to force and deceleration delimiting devices, and more particularly, to expandable volume filling mechanical structures that generally maintain a compressed volume and rapidly deploy to an expanded volume in response to a triggering event. The expanded volume provides energy absorbing properties to objects impacting the devices.

In the vehicular arts, there are generally two types of dedicated crash energy management structures utilized for minimizing the effect of an impact event: those that are passive, and those that are active. The active used in this context refers to selective expansion or movement of one component relative to another component to minimize the effect of an impact event.

Typically, passive energy absorbing structures have a static configuration in which their volume is fixed. The passive energy absorbing structures can dissipate energy and modify the levels and timing of a force/deceleration pulse by being impacted (e.g., crushing or stroking of a piston in a cylinder) so as to absorb the kinetic energy associated with such an event. Since these passive crash energy management structures occupy a maximum volume in the uncrushed/unstroked initial state, these types of structures inherently occupy significant vehicular space that must be dedicated for crash energy management and/or occupant protection -- the contraction space being otherwise unavailable for other use. Expressed another way, passive crash energy management and occupant protection structures use vehicular space equal to their initial volume, which consequently must be dedicated exclusively to impact energy management and/or occupant protection throughout the life of the vehicle. Because of this, some areas of a vehicle interior and/or exterior may be constrained in terms of their design/appearance because of the volume requirements of passive crash energy management and occupant protection devices.

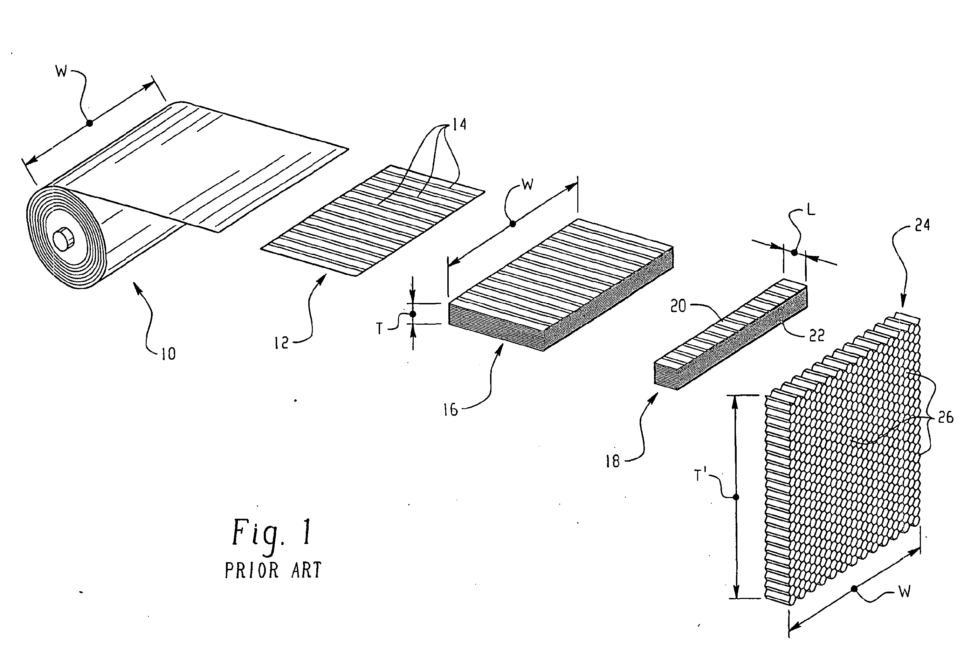

An example of a passive energy absorbing structure that has been used in vehicles is an expanded honeycomb celled material, which is disposed in the expanded form within the vehicle environment. Figure 1 illustrates a honeycomb celled material and its process flow for fabricating the honeycomb-celled material. A roll 10 of sheet material having a preselected width W is cut to provide a number of substrate sheets 12, each sheet having a number of closely spaced adhesive strips 14. The sheets 12 are stacked and the adhesive cured to thereby form a block 16 having a thickness T. The block 16 is then cut into appropriate lengths L to thereby provide so-called bricks 18. The bricks 18 are then expanded by physical separation of the upper and lower faces 20, 22, where adhesive strips serve as nodes to form the honeycomb cells. A fully expanded brick is composed of a honeycomb celled material 24 having clearly apparent hexagonally shaped cells 26. The ratio of the original thickness T to the expanded thickness T' is between about 1 to 20 to about 1 to 60. The honeycomb celled material is then used in fully expanded form within the vehicle environment to provide impact energy management and/or occupant protection (through force and deceleration limiting) substantially parallel to the cellular axis. As noted, because the honeycomb material is used in the fully expanded form, significant vehicular space is used to accommodate the expanded form, which space is permanently occupied by this dedicated energy management/occupant protection structure.

Active energy absorbing/occupant protection structures generally have a predetermined size that expands or moves in response to a triggering event so as to increase their contribution to crash energy management/occupant protection. One type of dedicated active energy absorbing/occupant protection structure is a stroking device, basically in the form of a piston and cylinder arrangement. Stroking devices can be designed, if desired, to have low forces in extension and significantly higher forces in compression (such as an extendable/retractable bumper system) which is, for example, installed at either the fore or aft end of the vehicle and oriented in the anticipated direction of crash induced crush. The rods of such devices would be extended to span the previously empty spaces in response to a triggering event, e.g., upon the detection of an imminent impact event or an occurring impact event (if located ahead of the crush front). This extension could be triggered alternatively by signals from a pre-crash warning system or from crash sensors or be a mechanical response to the crash itself. An example would be a forward extension of the rod due to its inertia under a high G crash pulse. Downsides of such an approach include high mass and limited expansion ratio.

Another example of an active energy absorbing/force and/or deceleration limiting structure is an impact protection curtain, e.g., a roll down inflatable shade that may cover a window opening in response to a triggering event. The roll down curtain, while being flexible in bending when out of plane, is quite stiff in-plane. Other devices, such as inflatable curtains, while inflated, act to help cushion the occupant upon impact.
[0006a] DE 44 25 830 A1 discloses a device and a method in accordance with the preambles of the independent claims.

Therefore, it is the object of the invention to improve expandable energy absorbing/force and/or deceleration limiting devices for impact attenuation.
[0007a] This object is achieved through the characterizing features of the independent claims.

### BRIEF SUMMARY

Disclosed herein are force and deceleration delimiting devices for a vehicle and methods for absorbing and/or attenuating an impact energy of an object in a vehicle environment. As used herein, reference to "energy absorbing" also refers to force and/or deceleration limiting since the devices described herein will function to limit the impact force on or deceleration of an object during an impact event. In one embodiment, a force and deceleration delimiting device for a vehicle comprises an open celled material expandable from a non-expanded state to an expanded state, wherein the open celled material is sandwiched between a first end cap member and a second end cap member; a support surface cooperatively positioned with the open celled material to cover a surface of the open celled material in the expanded and the non-expanded states; and an activation mechanism adapted to regulate selective expansion of the open celled material from the non-expanded state to the expanded state in response to a triggering event.

A method for absorbing an impact energy of an object in a vehicle environment comprises sensing an impact event; triggering an energy absorbing device, wherein the energy absorbing device comprises an open celled material expandable from a non-expanded state to an expanded state, a support surface cooperatively positioned with the open celled material to cover a surface of the open celled material in the expanded and the non-expanded states; and expanding the open celled material to the expanded state.

In another embodiment, a method for absorbing an impact energy, limiting the impact force on, and/or deceleration of an object in a vehicle environment comprises sensing or pre-sensing an impact event; and expanding an open celled material from a compressed volume to an expanded volume, wherein the expanded volume of the open celled material forms a transverse plane substantially perpendicular to an anticipated crash axis, wherein the anticipated crash axis is substantially parallel to a cellular axis of cells of the open celled material.

The above described and other features are exemplified by the following figures and detailed description.

### BRIEF DESCRIPTION OF THE DRAWINGS

Referring now to the figures, which are meant to be exemplary embodiments, and wherein the like elements are numbered alike.

Figure 1 is a perspective view of a manufacturing process to provide prior art honeycomb celled material;

Figure 2 is a perspective front view of a force and deceleration delimiting device comprising compressed honeycomb cellular material in accordance with the present disclosure, shown prior to expansion (stowed or compacted state);

Figure 3 is a perspective front view of a device comprising expanded honeycomb cellular material in accordance with the present disclosure, shown in an expanded state;

Figure 4 is a perspective cut-away view of a force and deceleration delimiting device according to the present disclosure, showing an example of an active activation system;

Figure 5 is a broken-away, top plan view, showing a trigger of an active activation system of Figure 4;

Figure 6 is a perspective side view of a force and deceleration delimiting device having a support sheet and a protection shield in accordance with the present disclosure, shown prior to expansion (stored state);

Figure 7 is a perspective side view of the device depicted in Figure 6 upon deployment in accordance with the present disclosure; and

Figure 8 is a perspective view of a vehicle illustrating various support structures for employing the force and deceleration delimiting device.

### DETAILED DESCRIPTION OF THE PREFERRED EMBODIMENT

The present disclosure is directed to expandable force and deceleration delimiting devices that generally maintain a compressed volume and rapidly deploy to an expanded volume in response to a triggering event. As previously expressed, reference made herein to "energy absorbing" also refers to force and/or deceleration limiting since the devices described herein will function to help to reduce the impact force on and/or decelerate an object during an impact event. The expanded volume advantageously provides energy absorbing properties to objects impacting the devices.

In one embodiment, the force and deceleration delimiting device comprises an expandable open celled material, wherein expansion of the open celled material is in a plane transverse to the cellular axis of the cells defining the cellular structure. For this embodiment as well as the other embodiments disclosed herein, crash crush is intended optimally, but not necessarily, to be parallel to the cellular axis. By way of example, a suitable open celled material has a honeycomb cellular structure. In a stowed or compact configuration, the honeycomb cellular structure can generally be defined as a honeycomb brick. The honeycomb brick has an initial compact volume in the sense that it is substantially compressed perpendicular to the longitudinal axis of its cells and parallel to the direction in which it is to be deployed. For ease of understanding, reference will now be made to honeycomb cellular structures although it should be understood that other open celled materials that can be compressed and expanded in the manner discussed below are equally suitable for the force and deceleration delimiting devices disclosed herein.

The honeycomb brick generally occupies anywhere from about 1/10th to about 1/60th of the volume that it assumes when in it is fully expanded (i.e., the expansion ratio), depending on the original cell dimensions and wall thicknesses, although higher or lower ratios can be employed depending on the particular application. Honeycomb cell geometries with smaller values of the above noted expansion ratio, in general, deliver larger crush forces.

The materials for forming the honeycomb cellular structure are not intended to be limited. The choices for materials are generally dependent upon the desired crush force (stiffness) for a particular application (i.e., softer or harder metals or composites). In one embodiment, the honeycomb cellular structure is formed of a lightweight metallic material, e.g., aluminum. Other suitable materials that are non-metallic include, but are not limited to, polymers such as nylon, cellulose, and other like materials. The material composition and honeycomb geometries will be determined by the desired application.

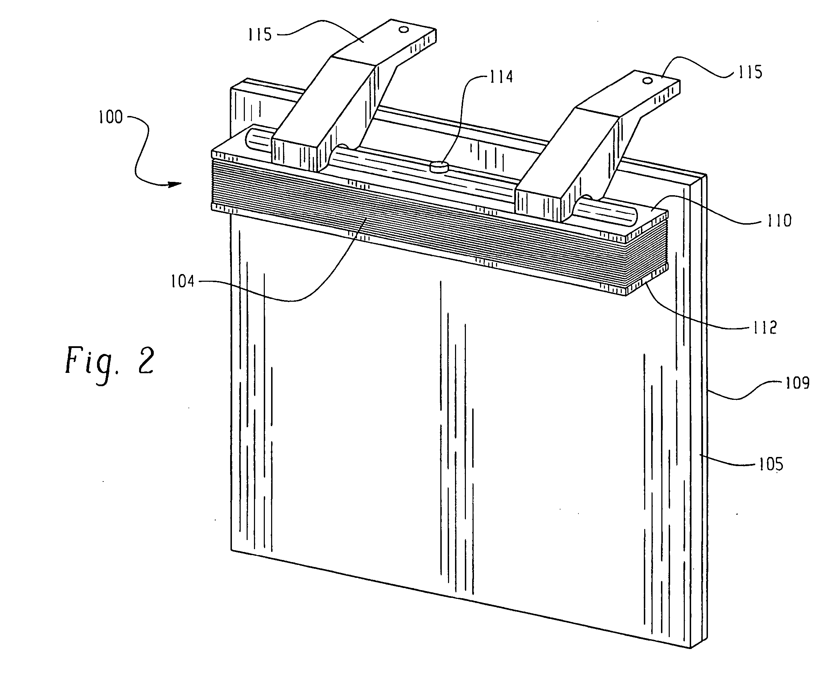

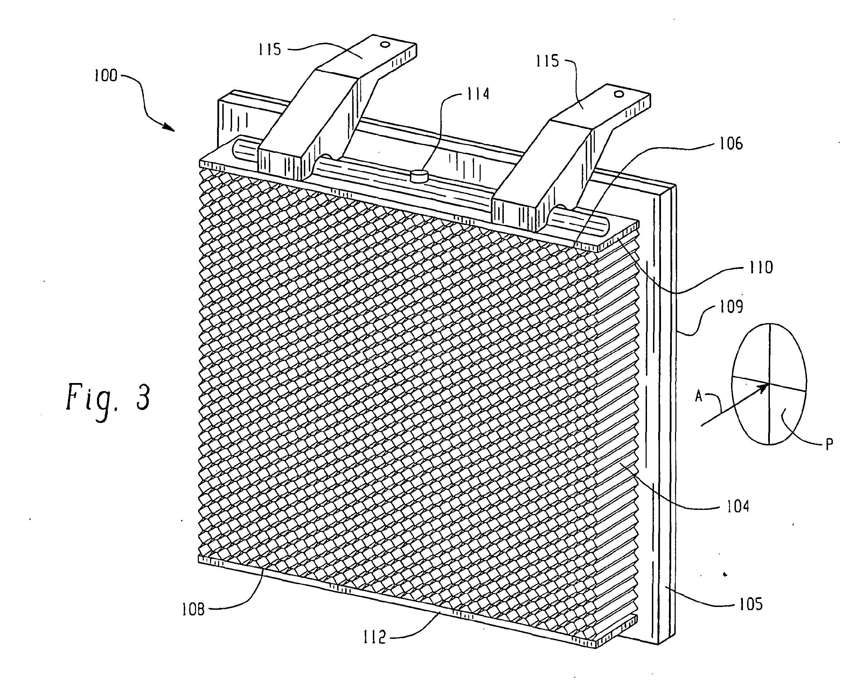

Turning to Figures 2 and 3, perspective views of a force and deceleration delimiting device 100 are shown that employ a honeycomb cellular structure 104. In particular, Figure 2 illustrates the force and deceleration delimiting device in a stowed or compact configuration (i.e., a honeycomb brick configuration) whereas Figure 3 illustrates the force and deceleration delimiting device upon expansion in response to a triggering event.

As shown more clearly in Figure 3, the geometry of the cells form the honeycomb cellular structure, although as noted above, other shapes and configurations are possible that would permit compression and expansion in the manner described herein. The honeycomb cellular structure 104 generally terminates at an upper face 106 and a lower face 108. Attached (such as, for example, by an adhesive) to the upper and lower faces 106, 108 are end cap members 110, 112, respectively. The end cap members 110, 112 are substantially rigid and serve as guides for defining the configuration of the honeycombed cellular structure 104 between the stowed or compacted configuration as shown at Figure 2 and the expanded configuration as shown at Figure 3. One of the end cap members, e.g., 110, is fixedly attached to the vehicle. As such, upon expansion of the force and deceleration delimiting device 100 in response to a triggering event, end cap member 112 moves relative to end cap member 110. In this manner, upon deployment, the expansion of honeycomb material 104 is in a transverse plane P which is preferably perpendicularly oriented to an anticipated crash axis A without expansion or contraction of the crash axis dimension.

The end cap members 110, 112 need not necessarily be planar as shown. Moreover, the end cap members do not need to have the same shape or size. For example, the end cap members 110, 112 may comprise a shape that compliments the area within the vehicle where the energy-absorbing device 100 is to be located. For example, in a wheel well, one or both of the end cap members may be curvilinear in shape as well as sized differently to accommodate the shape of the wheel well. As another example, such as may occur for expansion into a narrowing wedge shaped space, the end cap member (e.g., 112) that moves as the honeycomb cellular structure 104 expands may be shorter than the stationary end cap member (e.g., 110) so that the expanded honeycomb cellular structure 104 has a complimentary wedge shape.

An activation mechanism 114 is operably connected to end cap members 110, 112 to facilitate selective expansion of the force and deceleration delimiting device 100 in response to a triggering event. The activation mechanism 114 controls the volumetric state of the honeycomb-cellular structure 104 such that when activated, expansion from the stowed or compact configuration to the expanded configuration occurs. One or more installation brackets 115 may be connected to one of the end cap members 110, 112 so that the force and deceleration delimiting device 100 is connectable to a selected surface of the motor vehicle.

The force and deceleration delimiting device 100 may further include an optional support surface 105 for controlled directional expansion, which will be described in greater detail below. One support surface 105 or alternatively, two support surfaces can be employed to define a sandwich about the honeycomb cellular structure 104, depending on the application. Optionally, the surfaces 105 can be naturally defined by the vehicle structure in which the energy-absorbing device 100 is disposed. In a preferred embodiment, the support surface 105 is cooperatively disposed with the honeycomb cellular structure 104 opposite to that of an impact, and more preferably, only when a natural vehicle support surface does not exist. Additionally, in applications in which there may be occupant/pedestrian contact directly against the expanded honeycomb cellular structure 104, there may be a deployable front surface shield or screen 109 to smooth out the contact area.

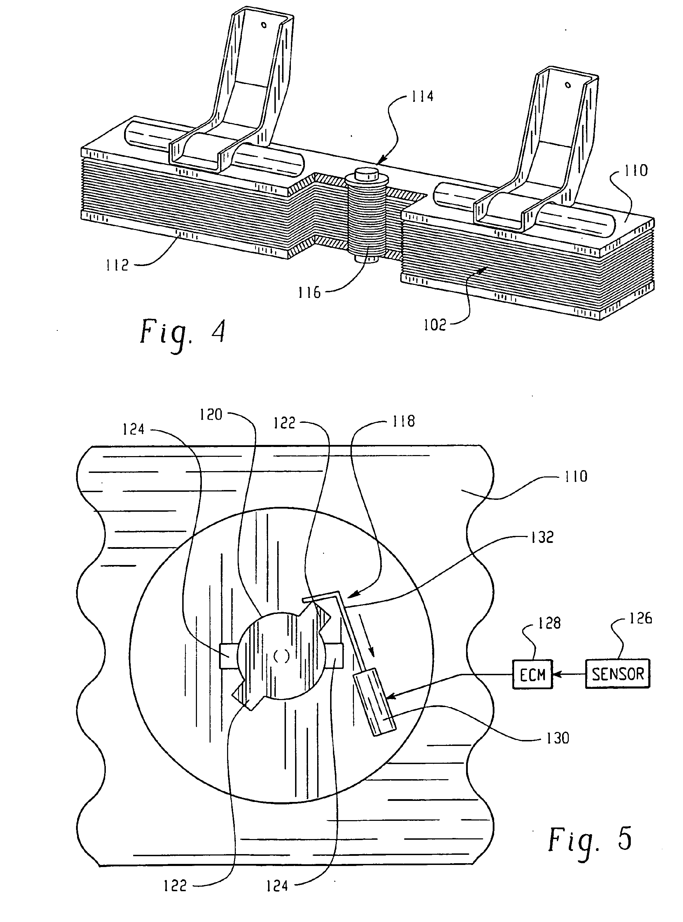

An example of a suitable activation mechanism 114 is shown in Figures 4 and 5. An expansion agent in the form of a compressed spring 116 is abuttingly situated in tension between end cap members 110, 112 when the honeycomb cellular structure 104 is in the compact or stowed configuration. A trigger 118 for selectively releasing energy associated with the compressed spring includes a disk 120 that is rotatably mounted on one of the end cap members, e.g., 110 as shown, wherein the disk has a pair of opposed fingers 122. The shape of the disk 120 is receivable by a similarly shaped opening 124 formed in the end cap member 110. The rotatable disk 120 is further supported by a rigid member (not shown, e.g., a bolt) that is fixedly attached to the opposing end cap member, e.g., 112. Although two opposing fingers are shown, it should be apparent that one or more fingers can be utilized. Moreover, it should be apparent that the shape of the disk 120 or the opening 124 is not intended to be limited and can vary as may be desired provided that locking engagement of the disk 120 against the end cap member 110 occurs in at least one rotational position of the disk and engagement release occurs at a different position.

Activation of the activation mechanism 114 causes the disk 120 to rotate and causes the shape of disk to become aligned with the shape of the opening 124. Upon alignment, the spring 116 is released causing rapid expansion of the honeycomb cellular structure 104. The compressive forces associated with the spring provide the expansion, wherein the magnitude of expansion can generally be increased with greater compressive forces in the spring 116. Other suitable expansion agents may include a pyrotechnic device or a pressurized air cylinder, for example, which is triggered upon rotation of the disk 120 as described or by other triggering means. Other triggering means could be electronically controlled, mechanically controlled, and the like. Alternatively, the activation mechanism 114 may be passive, wherein the impact event itself provides a mechanically trigger.

As previously described, the triggering event activates the activation mechanism 114. As such, the activation mechanism can be in operative communication with a controller for selectively activating the activation mechanism 114. For example, the controller can be an electronic control module 128 that is adapted to receive a signal from a sensor or detector 126, which signal is then interpreted by the electronic control module 128 to activate a solenoid 130. Solenoid 130 includes a linking arm 132 that is shown in operative communication with the disk 120 to effect rotation thereof in response to the activation signal.

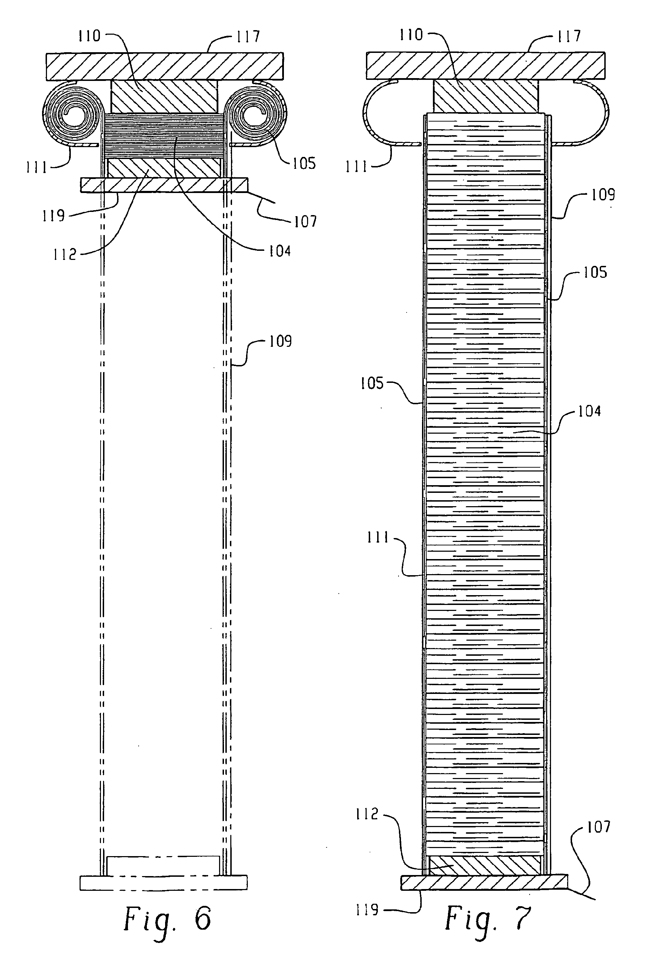

As shown more clearly in Figures 6 and 7, the energy-absorbing device 100 further includes the optional support layer 105 and optional shield 109. The support surface 105 functions as a support surface and guide for the force and deceleration delimiting device 100 during expansion thereof. In one embodiment, the support surface 105 and/or shield 109 are operably connected to the end cap member 112 as shown. In this manner, upon movement of end cap member 112 relative to end cap member 110 during expansion, the support surface 105 and shield 109 extend along with the honeycomb cellular structure 104. For example, as shown, the support layer 105 and shield 109 can be spooled (or folded or otherwise compacted as may be desired) when the force and deceleration delimiting device is in the stowed or compacted configuration and linearly expand in the direction of force and deceleration delimiting device 100 expansion to provide the support surface/guide and mitigation functions. The support surface 105 preferably comprises a material that is substantially stiff upon extension and resistant to stretching.

Optionally, the force and deceleration delimiting device 100 includes mounting plates 117, 119, fixedly attached to the end cap members 110, 112, respectively, which may further have connected thereto a connecting structure 107. The vehicle connecting structure 107 may include tethers of a fixed length lying in the plane of honeycomb cellular structure 104 routed through openings that define the individual honeycomb cells so that expansion of the energy-absorbing device occurs along a desired direction path. More than one vehicle connecting structure 107 can be used and may be attached at various points of the honeycomb cellular structure 104.

When employed within a passenger compartment of a vehicle, the support surface 105, if one is employed, faces away from the interior of a vehicle, whereas the honeycomb cellular structure 104 faces the interior of the vehicle. If required by the nature of the honeycomb cellular material 104, a shield 109 faces the interior of the vehicle. However, it should be apparent by those in the art that placement and style of the device 100 will be determined by the desired application. In one embodiment, the support layer 105 and the honeycomb cellular structure 104 may be physically separate with respect to each other upon expansion thereof. In another embodiment, the support layer 105 and the honeycomb cellular structure 104 may be adjacent to each other, each being connected only at selected points, wherein the selected points may constrain the honeycomb material 104 at predetermined points. In a similar manner, the shield 109 may be disposed and connected at selected points along the honeycomb material.

The force and deceleration delimiting device 100 further includes an optional protection shield 111 about the spooled support surface 105 and/or shield 109. The protection shield 111 is comprised of any of a variety of suitable flexible materials known to those skilled in the art.

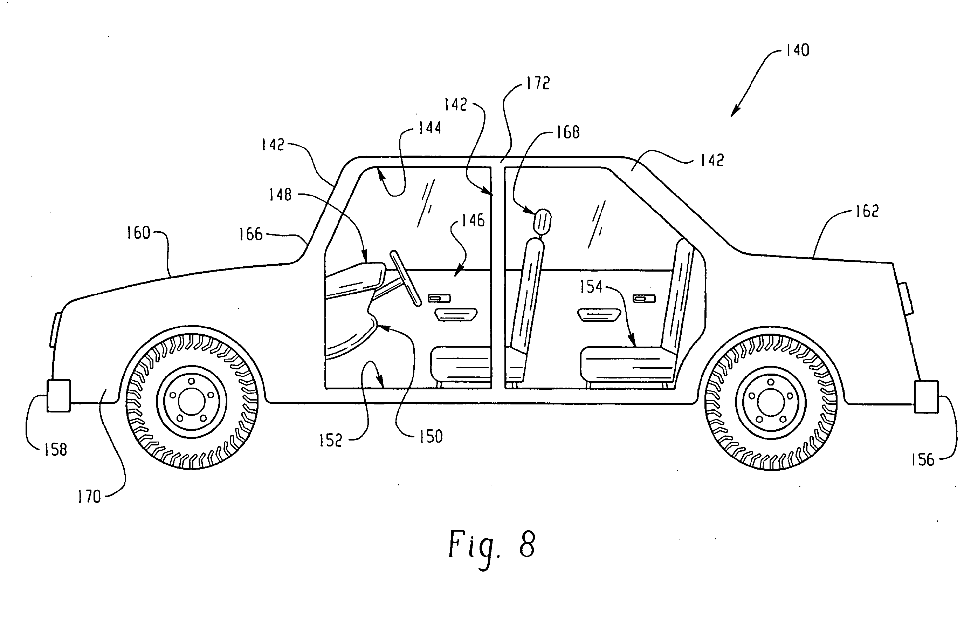

Figure 8 is a perspective view of a vehicle 140 illustrating various support structures and stationary surfaces for employing the energy-absorbing device 100. For example, the force and deceleration delimiting device 100 can be used in conjunction with conventional padded interior surfaces in the vehicle 140. Specifically, the device 100 can be used for the door pillars 142, the header 144, the door interiors 146, dashboard 148, the knee bolsters 150, head rest 168, and other areas such as under the carpet on the vehicle floor 152, the seat 154 itself, or like surfaces where absorption of kinetic energy/limiting of forces/decelerations caused by impact of an object with the surface is desired and/or proper positioning of an occupant is desired during a triggering event such as an impact. For example, locating the energy-absorbing assembly under the carpet can be used to assist the positioning of an occupant's knees with respect to the knee bolster. In the seat area, the device can be strategically positioned to provide stiffening at an edge of the seat 154.. Forces/decelerations due to impact with other areas of the vehicle, such as the door pillars 142, can be reduced with device 100.

As further shown in Figure 8, the device 100 may be placed outside the vehicle 120. As shown, the device 100 may be positioned at an exterior/interior surface of a bumper 156, 158, hood 160, trunk 162, roof 172, wheel well 170, cowl 166, and like areas.

The force and deceleration delimiting device 100 can be tailored to the site of application. For example, for exterior sites such as the vehicle bumper and fender, triggering can occur prior to a triggering event, or at the time of the triggering event. The triggering event is not intended to be limited to a single event. For example, the triggering event may occur if a variety of conditions are detected or sensed, e.g., an impact event at a vehicle speed greater than 15 kilometers per hour. As such, a pre-crash sensor and/or an impact severity prediction algorithm can be employed to program the electronic control module 128. The expansion of the honeycomb-celled structure would be rapid or slow, greater or lesser depending on how the system is programmed. Devices used in this location could be designed to be reversible in the event of false crash detection, as their deployment has no effect on the operation of the vehicle. For example, devices 100 within the vehicle 120 may be deployed either before or during an impact event. If deployed before the impact event, the expansion of the honeycomb-celled material could be fast or slow, and would require a pre-impact sensor (and, optimally, with a impact severity algorithm) for selective triggering. If deployed during an impact event, the expansion of the honeycomb-cellular structure must be rapid, and should occur only at speeds where significant crush will occur. Accordingly, triggering may be effected by crash caused displacements. Devices used in this location would not be reversible and would require a very accurate detection system, as their deployment could interfere with operation of the vehicle.

## Claims

1. A force and deceleration delimiting device (100) for a vehicle (140), the device comprising:
an open celled material (104) expandable from a non-expanded state to an expanded state, wherein the open celled material (104) is sandwiched between a first end cap member (110) and a second end cap member (112); and
an activation mechanism (114) adapted to regulate selective expansion of the open celled material from the non-expanded state to the expanded state in response to a triggering event
**characterized in that**
a support surface (105) is cooperatively positioned with the open celled material (104) to cover a surface of the open celled material (104) in the expanded and the non-expanded states; and **in that**
the activation mechanism (114) comprises:
a compression spring (116) in biased communication with the first end cap member (110) and the second end cap member (112) when the open celled material (104) is in the non-expanded state;
an opening (124) in the first end cap member (110) corresponding to a first shape;
a disk (120) rotatably engaged with the opening (124) of the first end cap member (110), wherein the disk (120) is lockingly engaged with the first end cap member (110) in the non-expanded state and is coaxially aligned with the opening (124) the expanded state; and
a trigger (118) in operative communication with the disk (120) adapted to effect rotation of the disk (120) in response to the triggering event.

2. The force and deceleration delimiting device (100) of claim 1, wherein the open celled material (104) comprises a honeycomb cellular structure.

3. The force and deceleration delimiting device (100) of any one of the preceding claims, wherein the compact shape of the support surface (105) comprises a coiled or folded configuration.

4. The force and deceleration delimiting device (100) of any one of the preceding claims, wherein the support surface (105) has a compact shape when the open celled material (104) is in the non-expanded state and an expanded shape when the open celled material (104) is in the expanded state.

5. The force and deceleration delimiting device (100) of any one of the preceding claims, wherein the support surface (105) comprises a vehicle surface.

6. The force and deceleration delimiting device (100) of any one of the preceding claims, further comprising a laceration shield (109) cooperatively positioned with the open celled material (104) to cover a surface of the open celled material (104) in the expanded and the non-expanded states.

7. The force and deceleration delimiting device (100) of claim 6, wherein the compact shape of the laceration shield (109) comprises a coiled or folded configuration.

8. The force and deceleration delimiting device (100) of any one of the preceding claims, wherein the open celled material (104) is aluminum.

9. The force and deceleration delimiting device (100) of any one of the preceding claims, wherein the first end cap member (110) is fixedly attached to a stationary surface within the vehicle (140).

10. The force and deceleration delimiting device (100) of any one of the preceding claims, further comprising a sensor (126) in electrical communication with the controller (128).

11. The force and deceleration delimiting device (100) of any one of the preceding claims, wherein the expanded state of the open celled material (104) comprises a transverse plane (P) substantially perpendicular to an anticipated crash axis (A), wherein the anticipated crash axis (A) is substantially parallel to a cellular axis of cells of the open celled material (104).

12. The force and deceleration delimiting device (100) of any one of the preceding claims, wherein the support surface (105) is spooled and has one end fixedly attached to the first end cap member (110) and an other end fixedly attached to the second end cap member (112).

13. The force and deceleration delimiting device (100) of any one of the preceding claims, further comprising a protective shield (111) about the support surface (105).

14. The force and deceleration delimiting device (100) of any one of the preceding claims, wherein the force and deceleration delimiting device (100) has a non-expanded volume of 1/10^{th} to 1/60^{th} relative to an expanded volume.

15. The force and deceleration delimiting device (100) of any one of the preceding claims, wherein the first end cap member (110) has a different shape from the second end cap member (112).

16. A method for absorbing an impact energy of an object in a vehicle environment, comprising:
sensing an impact event;
triggering a force and deceleration delimiting device (100), wherein the force and deceleration delimiting device (100) comprises an open celled material (104) expandable from a non-expanded state to an expanded state, a support surface (105) cooperatively positioned with the open celled material (104) to cover a surface of the open celled material (104) in the expanded and the non-expanded states; and
expanding the open celled material (104) to the expanded state
**characterized in that**
triggering the force and deceleration delimiting device (100) comprises:
activating an activation mechanism (114), wherein the activation mechanism (114) comprises a compression spring (116) in biased communication with the first end cap member (110) and the second end cap member (116) when the open celled material (104) is in the non-expanded state, wherein an opening (124) in the first end cap member (110) corresponds to a first shape; and
a disk (120) rotatably engages the opening of the first end cap member (110), wherein the disk (120) is lockingly engaged with the first end cap member (110) in the non-expanded state and is coaxially aligned with the opening (124) the expanded state; and
a trigger (118) is provided in operative communication with the disk (120) and is adapted to effect rotation of the disk (120)..

17. The method of Claim 16, further comprising resetting the force and deceleration delimiting device (100) comprising compressing the open celled material (104) from the expanded state to the non-expanded state.

## Patentansprüche

1. Kraft- und Verzögerungsbegrenzungsvorrichtung (100) für ein Fahrzeug (140), wobei die Vorrichtung umfasst:
ein offenzelliges Material (104), das von einem nicht ausgedehnten Zustand in einen ausgedehnten Zustand ausdehnbar ist, wobei das offenzellige Material (104) schichtartig zwischen einem ersten Endkappenelement (110) und einem zweiten Endkappenelement (112) angeordnet ist; und
einen Aktivierungsmechanismus (114), der derart ausgebildet ist, um eine selektive Ausdehnung des offenzelligen Materials von dem nicht ausgedehnten Zustand in den ausgedehnten Zustand in Ansprechen auf ein Auslöseereignis zu regeln,
**dadurch gekennzeichnet, dass**
eine Stützfläche (105) zusammenwirkend mit dem offenzelligen Material (104) positioniert ist, um eine Fläche des offenzelligen Materials (104) in dem ausgedehnten und dem nicht ausgedehnten Zustand zu bedecken; und
dass der Aktivierungsmechanismus (114) umfasst:
eine Kompressionsfeder (116) in vorgespannter Verbindung mit dem ersten Endkappenelement (110) und dem zweiten Endkappenelement (112), wenn sich das offenzellige Material (104) in dem nicht ausgedehnten Zustand befindet;
eine Öffnung (124) in dem ersten Endkappenelement (110), die einer ersten Form entspricht;
eine Scheibe (120), die drehbar mit der Öffnung (124) des ersten Endkappenelements (110) in Eingriff steht, wobei die Scheibe (120) mit dem ersten Endkappenelement (110) in dem nicht ausgedehnten Zustand verriegelnd in Eingriff steht und in dem ausgedehnten Zustand koaxial mit der Öffnung (124) ausgerichtet ist; und
einen Auslöser (118) in Wirkverbindung mit der Scheibe (120), der derart ausgebildet ist, um eine Rotation der Scheibe (120) in Ansprechen auf das Auslöseereignis zu bewirken.

2. Kraft- und Verzögerungsbegrenzungsvorrichtung (100) nach Anspruch 1, wobei das offenzellige Material (104) eine wabenförmige Zellenstruktur umfasst.

3. Kraft- und Verzögerungsbegrenzungsvorrichtung (100) nach einem der vorhergehenden Ansprüche, wobei die kompakte Form der Stützfläche (105) eine gewickelte oder gefaltete Konfiguration umfasst.

4. Kraft- und Verzögerungsbegrenzungsvorrichtung (100) nach einem der vorhergehenden Ansprüche, wobei die Stützfläche (105) eine kompakte Form aufweist, wenn sich das offenzellige Material (104) in dem nicht ausgedehnten Zustand befindet, und eine ausgedehnte Form aufweist, wenn sich das offenzellige Material (104) in dem ausgedehnten Zustand befindet.

5. Kraft- und Verzögerungsbegrenzungsvorrichtung (100) nach einem der vorhergehenden Ansprüche, wobei die Stützfläche (105) eine Fahrzeugfläche umfasst.

6. Kraft- und Verzögerungsbegrenzungsvorrichtung (100) nach einem der vorhergehenden Ansprüche, ferner mit einem Schnittwundenschutzschild (109), das zusammenwirkend mit dem offenzelligen Material (104) positioniert ist, um eine Fläche des offenzelligen Materials (104) in dem ausgedehnten und dem nicht ausgedehnten Zustand zu bedecken.

7. Kraft- und Verzögerungsbegrenzungsvorrichtung (100) nach Anspruch 6, wobei die kompakte Form des Schnittwundenschutzschildes (109) eine gewickelte oder gefaltete Konfiguration umfasst.

8. Kraft- und Verzögerungsbegrenzungsvorrichtung (100) nach einem der vorhergehenden Ansprüche, wobei das offenzellige Material (104) Aluminium ist.

9. Kraft- und Verzögerungsbegrenzungsvorrichtung (100) nach einem der vorhergehenden Ansprüche, wobei das erste Endkappenelement (110) fest an einer stationären Fläche in dem Fahrzeug (140) angebracht ist.

10. Kraft- und Verzögerungsbegrenzungsvorrichtung (100) nach einem der vorhergehenden Ansprüche, ferner mit einem Sensor (126) in elektrischer Verbindung mit dem Controller (128).

11. Kraft- und Verzögerungsbegrenzungsvorrichtung (100) nach einem der vorhergehenden Ansprüche, wobei der ausgedehnte Zustand des offenzelligen Materials (104) eine Querebene (P) umfasst, die im Wesentlichen rechtwinklig zu einer voraussichtlichen Zusammenstoßachse (A) liegt, wobei die voraussichtliche Zusammenstoßachse (A) im Wesentlichen parallel zu einer Zellenachse der Zellen des offenzelligen Materials (104) liegt.

12. Kraft- und Verzögerungsbegrenzungsvorrichtung (100) nach einem der vorhergehenden Ansprüche, wobei die Stützfläche (105) aufgewickelt ist und ein Ende fest an dem ersten Endkappenelement (110) angebracht ist und ein anderes Ende fest an dem zweiten Endkappenelement (112) angebracht ist.

13. Kraft- und Verzögerungsbegrenzungsvorrichtung (100) nach einem der vorhergehenden Ansprüche, ferner mit einem Schutzschild (111) um die Stützfläche (105).

14. Kraft- und Verzögerungsbegrenzungsvorrichtung (100) nach einem der vorhergehenden Ansprüche, wobei die Kraft- und Verzögerungsbegrenzungsvorrichtung (100) ein nicht ausgedehntes Volumen von einem 1/10 bis zu einem 1/60 relativ zu einem ausgedehnten Volumen aufweist.

15. Kraft- und Verzögerungsbegrenzungsvorrichtung (100) nach einem der vorhergehenden Ansprüche, wobei das erste Endkappenelement (110) eine von dem zweiten Endkappenelement (112) verschiedene Form aufweist.

16. Verfahren zum Absorbieren einer Aufprallenergie eines Objekts in einer Fahrzeugumgebung, umfassend, dass:
ein Aufprallereignis erfasst wird;
eine Kraft- und Verzögerungsbegrenzungsvorrichtung (100) ausgelöst wird, wobei die Kraft- und Verzögerungsbegrenzungsvorrichtung (100) ein offenzelliges Material (104), das von einem nicht ausgedehnten Zustand in einen ausgedehnten Zustand ausdehnbar ist, und eine Stützfläche (105) umfasst, die zusammenwirkend mit dem offenzelligen Material (104) positioniert ist, um eine Fläche des offenzelligen Materials (104) in dem ausgedehnten und dem nicht ausgedehnten Zustand zu bedecken; und
das offenzellige Material (104) in den ausgedehnten Zustand ausgedehnt wird,
**dadurch gekennzeichnet, dass**:
das Auslösen der Kraft- und Verzögerungsbegrenzungsvorrichtung (100) umfasst, dass:
ein Aktivierungsmechanismus (114) aktiviert wird, wobei der Aktivierungsmechanismus (114) eine Kompressionsfeder (116) in vorgespannter Verbindung mit dem ersten Endkappenelement (110) und dem zweiten Endkappenelement (116) umfasst, wenn sich das offenzellige Material (104) in dem nicht ausgedehnten Zustand befindet, wobei eine Öffnung (124) in dem ersten Endkappenelement (110) einer ersten Form entspricht; und
eine Scheibe (120) drehbar mit der Öffnung des ersten Endkappenelements (110) in Eingriff steht, wobei die Scheibe (120) mit dem ersten Endkappenelement (110) in dem nicht ausgedehnten Zustand verriegelnd in Eingriff tritt und in dem ausgedehnten Zustand koaxial mit der Öffnung (124) ausgerichtet wird; und
ein Auslöser (118) in Wirkverbindung mit der Scheibe (120) vorgesehen ist und derart ausgebildet ist, um eine Drehung der Scheibe (120) zu bewirken.

17. Verfahren nach Anspruch 16, ferner umfassend, dass die Kraft- und Verzögerungsbegrenzungsvorrichtung (100) rückgesetzt wird, was umfasst, dass das offenzellige Material (104) von dem ausgedehnten Zustand in den nicht ausgedehnten Zustand komprimiert wird.

## Revendications

1. Dispositif de limitation de force et de décélération (100) pour véhicule (140), le dispositif comprenant
un matériau à alvéoles ouverts (104) expansible d'un état non expansé dans un état expansé, le matériau à alvéoles ouverts (104) étant pris en sandwich entre un premier élément d'extrémité (110) et un deuxième élément d'extrémité (112) ; et
un mécanisme d'activation (114) destiné à réguler l'expansion sélective du matériau à alvéoles ouverts de l'état non expansé dans l'état expansé en réponse à un événement de déclenchement
**caractérisé en ce que**
une surface de support (105) est positionnée de façon à coopérer avec le matériau à alvéoles ouverts (104) afin de couvrir une surface du matériau à alvéoles ouverts (104) à l'état expansé et à l'état non expansé ; et **en ce que**
le mécanisme d'activation comprend
un ressort de compression (116) en communication de poussée avec le premier élément d'extrémité (110) et le deuxième élément d'extrémité (112) lorsque le matériau à alvéoles ouverts (104) est à l'état non expansé ;
une ouverture (124) ménagée dans le premier élément d'extrémité (110) et correspondant à une première forme ;
un disque (120) engagé à rotation avec l'ouverture (124) du premier élément d'extrémité (110), le disque (120) étant en engagement de blocage avec le premier élément d'extrémité (110) à l'état non expansé et étant aligné coaxialement avec l'ouverture (124) à l'état expansé ; et
un déclencheur (118) en communication fonctionnelle avec le disque (120) et destiné à faire tourner le disque (120) en réponse à l'événement de déclenchement.

2. Dispositif de limitation de force et de décélération (100) selon la revendication 1, dans lequel le matériau à alvéoles ouverts (104) a une structure alvéolaire en nid d'abeille.

3. Dispositif de limitation de force et de décélération (100) selon l'une quelconque des revendications précédentes, dans lequel la forme compacte de la surface de support (105) a une configuration enroulée ou pliée.

4. Dispositif de limitation de force et de décélération (100) selon l'une quelconque des revendications précédentes, dans lequel la surface de support (105) a une forme compacte lorsque le matériau à alvéoles ouverts (104) est à l'état non expansé et une forme expansée lorsque le matériau à alvéoles ouverts (104) est à l'état expansé.

5. Dispositif de limitation de force et de décélération (100) selon l'une quelconque des revendications précédentes, dans lequel la surface de support (105) comprend une surface de véhicule.

6. Dispositif de limitation de force et de décélération (100) selon l'une des revendications précédentes, comprenant en outre un écran anti-lacération (109) positionné de façon à coopérer avec le matériau à alvéoles ouverts (104) afin de couvrir une surface du matériau à alvéoles ouverts (104) à l'état expansé et à l'état non expansé.

7. Dispositif de limitation de force et de décélération (100) selon la revendication 6, dans lequel la forme compacte de l'écran anti-lacération (109) a une configuration enroulée ou pliée.

8. Dispositif de limitation de force et de décélération (100) selon l'une quelconque des revendications précédentes, dans lequel le matériau à alvéoles ouverts (104) est de l'aluminium.

9. Dispositif de limitation de force et de décélération (100) selon l'une quelconque des revendications précédentes, dans lequel le premier élément d'extrémité (110) est fixé à une surface immobile à l'intérieur du véhicule (140).

10. Dispositif de limitation et de décélération (100) selon l'une quelconque des revendications précédentes, comprenant en outre un capteur (126) en communication électrique avec l'organe de commande (128).

11. Dispositif de limitation de force et de décélération (100) selon l'une quelconque des revendications précédentes, dans lequel l'état expansé du matériau à alvéoles ouverts (104) comprend un plan transversal (P) sensiblement perpendiculaire à un axe de collision anticipée (A), l'axe de collision anticipée (A) étant sensiblement parallèle à un axe des alvéoles du matériau alvéoles ouverts (104).

12. Dispositif de limitation de force et de décélération (100) selon l'une quelconque des revendications précédentes, dans lequel la surface de support (105) est enroulée et présente une première extrémité fixée au premier élément d'extrémité (110) et une autre extrémité fixée au deuxième élément d'extrémité (112).

13. Dispositif de limitation de force et de décélération (100) selon l'une des revendications précédentes, comprenant en outre un écran de protection (111) autour de la surface de support (105).

14. Dispositif de limitation de force et de décélération (100) selon l'une quelconque des revendications précédentes, dans lequel le dispositif de limitation de force et de décélération (100) a un volume non expansé de 1/10 à 1/60 du volume expansé.

15. Dispositif de limitation de force et de décélération (100) selon l'une quelconque des revendications précédentes, dans lequel le premier élément d'extrémité (110) a une forme différente de celle du deuxième élément d'extrémité (112).

16. Procédé d'absorption d'énergie de choc d'un objet dans un environnement de véhicule, comprenant :
la détection d'un événement de choc ;
le déclenchement d'un dispositif de limitation de force et de décélération (100), le dispositif de limitation de force et de décélération (100) comprenant un matériau à alvéoles ouverts (104) expansible d'un état non expansé dans un état expansé, une surface de support (105) positionnée de façon à coopérer avec le matériau à alvéoles ouverts (104) pour couvrir une surface du matériau à alvéoles ouverts (104) dans l'état expansé et à l'état non expansé ; et
l'expansion du matériau à alvéoles ouverts (104) dans l'état expansé
**caractérisé en ce que**
le déclenchement du dispositif de limitation de force et de décélération (100) comprend :
l'activation d'un mécanisme d'activation (114), le mécanisme d'activation (114) comprenant un ressort de compression (116) en communication de poussée avec le premier élément d'extrémité (110) et le deuxième élément d'extrémité (116) lorsque le matériau à alvéoles ouverts (104) est à l'état non expansé, une ouverture (124) ménagée dans le premier élément d'extrémité (110) correspondant à une première forme ;
un disque (120) s'engage à rotation dans l'ouverture du premier élément d'extrémité (110), le disque (120) étant en engagement de blocage avec le premier élément d'extrémité (110) à l'état non expansé et étant aligné coaxialement à l'ouverture (124) à l'état expansé ; et
un déclencheur (118) est prévu en communication fonctionnelle avec le disque (120) et est destiné à faire tourner le disque (120).

17. Procédé selon la revendication 16, comprenant en outre le repositionnement du dispositif de limitation de force et de décélération (100) comprenant la compression du matériau à alvéoles ouverts (104) de l'état expansé dans l'état non expansé.
